# EUROPÄISCHE PATENTSCHRIFT

(11) **EP 2 877 314 B1**
(45) Veröffentlichungstag und Bekanntmachung des Hinweises auf die Patenterteilung: **02.01.2019**
(21) Anmeldenummer: 13734788.6
(22) Anmeldetag: 09.07.2013
(51) Int. Cl.: B23K 26/08, B25J 18/04

(54) **VORRICHTUNG ZUM DREHEN EINES LASERBEARBEITUNGSKOPFES MITTELS EINES TORQUE-MOTORS**
DEVICE FOR ROTATING A LASER PROCESSING HEAD BY MEANS OF A TORQUE MOTOR
DISPOSITIF DE ROTATION D'UNE TÊTE D'USINAGE AU LASER AU MOYEN D'UN MOTEUR COUPLE

(30) Priorität: 26.07.2012 DE 102012213206
(43) Veröffentlichungstag der Anmeldung: 03.06.2015
(73) Patentinhaber: TRUMPF Laser- und Systemtechnik GmbH, 71254 Ditzingen (DE)
(72) Erfinder: WIDMANN, Dominik, 75378 Bad Liebenzell (DE); SAUTER, Dietrich, 72555 Metzingen (DE)
(74) Vertreter: Kohler Schmid Möbus Patentanwälte
(86) Internationale Anmeldenummer: PCT/EP2013/064478
(87) Internationale Veröffentlichungsnummer: WO 2014/016111

(56) Entgegenhaltungen:
- EP-A1- 0 407 592
- WO-A1-2010/094449
- US-A- 4 710 606
- US-A1- 2003 011 338
- US-A1- 2003 223 853
- US-A1- 2011 120 251

## Beschreibung

Die vorliegende Erfindung betrifft eine Vorrichtung zum Drehen mindestens eines Laserbearbeitungskopfes um mindestens eine Achse, gemäss dem Oberbegriff des Anspruchs 1, wie z.B. aus der EP 0 407 592 A1 bekannt.

Es sind Laserbearbeitungsmaschinen, wie z.B. die TruLaser Cell 7000/8000, bekannt, deren Laserbearbeitungskopf drei Linear- und zwei Rotationsachsen aufweist. Bei den Rotationsachsen handelt es sich um zu einander senkrechte B- und C-Achsen. Die zugehörigen B- und C-Achsverbunde bestehen aus zwei Antriebsmotoren, welche jeweils über ein B- und C-Getriebe die Drehmomente über zwei koaxial inneinanderliegende B- und C-Rohre zu dem Laserbearbeitungskopf weiterleiten. Das äußere C-Rohr dreht den Laserbearbeitungskopf um die C-Achse, und das innere B-Rohr dreht über ein Winkelgetriebe, wie z.B. ein Kegelradgetriebe, einen Anschlussstutzen des Laserbearbeitungskopfs um die B-Achse.

Allerdings werden für die beiden B- und C-Achsverbunde mit ihren eigenständigen Antriebsmotoren, Getrieben und den zwei ineinanderliegenden B- und C-Rohren eine Vielzahl aufwendiger Fertigungsteile für die Lagerung der Rohre, die Kabelführung und die Zuordnung der Antriebe zueinander benötigt. Diese vielen Fertigungsteile führen zu einer hohen Masse, welche die Dynamik in den drei Linearachsen reduziert, und verhindern eine noch kompaktere Bauweise. Die Masse spielt bei der TruLaser Cell 7000/8000 eine erhebliche Rolle, da sich das B-C-Getriebe in einer Pinole befindet und durch die Linearachsen bewegt wird. Die zu bewegende Masse hat einen Einfluss auf das Dynamikverhalten und die benötigte Antriebsleistung der Linearachsen und damit auf die Bearbeitungsgeschwindigkeit der Laserbearbeitungsmaschine.

Demgegenüber ist es die Aufgabe der vorliegenden Erfindung, bei einer Vorrichtung der eingangs genannten Art die Anzahl aufwendiger Fertigungsteile zu reduzieren, Masse einzusparen sowie eine noch kompaktere Bauweise umzusetzen.

Diese Aufgabe wird erfindungsgemäß dadurch gelöst, dass die beiden Drehantriebe durch einen Torque-Motor mit zwei in einem gemeinsamen Statorgehäuse drehbar gelagerten, axial beabstandeten Rotoren und mit zwei im Statorgehäuse angeordneten, axial beabstandeten Magnetspulen gebildet sind. Bevorzugt sind die beiden Rotoren als innere Rotoren und das Statorgehäuse als äußeres Statorgehäuse ausgebildet.

Erfindungsgemäß wird ein direkt angetriebener Torque-Motor mit einem Statorgehäuse und zwei eigenständigen Rotoren (Läufern) vorgeschlagen. Das große Antriebsmoment eines Torque-Motors ermöglicht große Beschleunigungen und führt zu einer hohen Dynamik des Gesamtsystems. Im Statorgehäuse befinden sich zwei unabhängige Magnetspulen, die die Magnetfelder der beiden Rotoren unabhängig voneinander anregen. Zwei Torque-Motoren sind damit in einem gemeinsamen Statorgehäuse untergebracht, wodurch aufwendige Fertigungsteile entfallen. Die erfindungsgemäße Konstruktion lässt sich kompakter und damit platzsparender bauen, und der Montageaufwand wird deutlich reduziert. Die reduzierte Masse der erfindungsgemäßen Vorrichtung verbessert das Dynamikverhalten, die benötigte Antriebsleistung der Linearachsen und damit die Bearbeitungsgeschwindigkeit der Laserbearbeitungsmaschine.

Es ist erfindungsgemäß auch eine Vorrichtung denkbar, bei der die beiden koaxial ineinanderliegenden Rohre an ihren gegenüberliegenden Enden bspw. mit zwei Laserbearbeitungsköpfen verbunden sind.

Vorzugsweise ist die Vorrichtung zum Drehen eines Laserbearbeitungskopfes um zwei rechtwinklige B- und C-Achsen vorgesehen. Dazu kann beispielsweise ein zur Befestigung des Laserbearbeitungskopfes dienender Anschlussstutzen in dem äußeren Rohr um die B-Achse drehbar gelagert und ein Winkelgetriebe zwischen dem inneren Rohr und dem Anschlussstutzen vorgesehen sein.

Denkbar ist auch eine Anordnung, bei der die beiden koaxial ineinanderliegenden Bund C-Rohre an ihren gegenüberliegenden Enden bspw. mit zwei Laserbearbeitungsköpfen verbunden sind. Die beiden Rohre werden dann durch die beiden Drehantriebe um die gemeinsame Rohrachse gedreht. Die beiden Drehantriebe werden durch einen Torque-Motor mit zwei in einem gemeinsamen Statorgehäuse drehbar gelagerten, axial beabstandeten Rotoren und mit zwei im Statorgehäuse angeordneten, axial beabstandeten Magnetspulen gebildet. Die beiden B- und C-Rohre können dann über ein oder mehrere Getriebe, bspw. Winkelgetriebe, den bzw. die Laserbearbeitungsköpfe um eine bspw. senkrecht zur Rohrachse stehenden Achse drehen. Vorzugsweise sind die Kabel der beiden Magnetspulen auf der gleichen axialen Stirnseite des Torque-Motors vorgesehen bzw. aus dem Torque-Motor herausgeführt, wobei die Kabel der einen Magnetspule an der anderen Magnetspule vorbeigeführt sind.

Vorteilhaft ist jedem der beiden Rotoren ein eigenes Messsystem zum Bestimmen seiner jeweiligen Drehposition zugeordnet, wobei die beiden Messsysteme auf unterschiedlichen Stirnseiten des Torque-Motors angeordnet sein können.

Die erfindungsgemäße Vorrichtung ist zum Drehen des Bearbeitungskopfes jeder Art von Werkzeugmaschine geeignet, insbesondere aber zum Drehen des Laserbearbeitungskopfes einer Laserbearbeitungsmaschine. Im letzteren Fall kann dem Laserbearbeitungskopf der Laserstrahl über das innere Rohr, einen im äußeren Rohr angeordneten Spiegel und den rohrförmig ausgeführten Anschlussstutzen zugeführt sein.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Das gezeigte und beschriebene Ausführungsbeispiel ist nicht als abschließende Aufzählung zu verstehen, sondern hat vielmehr beispielhaften Charakter für die Schilderung der Erfindung.

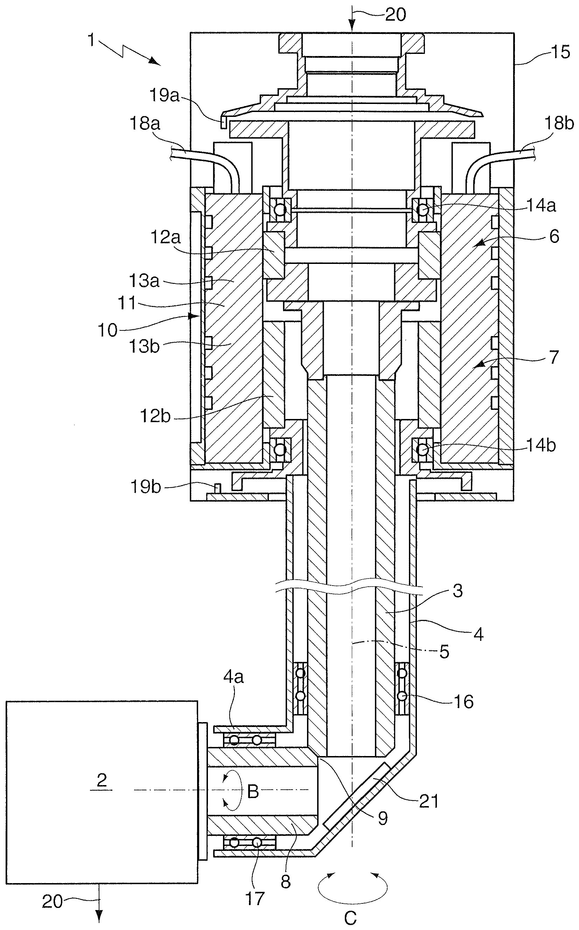

Die einzige Fig. 1 zeigt die erfindungsgemäße Vorrichtung zum Drehen eines Laserbearbeitungskopfes mittels eines Torque-Motors.

Die in Fig. 1 gezeigte Vorrichtung 1 dient zum Drehen eines Laserbearbeitungskopfes 2 um zwei rechtwinklige **B**- und C-Achsen.

Die Drehvorrichtung 1 umfasst zwei koaxial ineinanderliegende Rohre 3, 4, die um eine gemeinsame, die C-Achse bildende Rohrachse 5 drehbar gelagert sind, zwei eigenständige Drehantriebe 6, 7 zum Drehen der beiden Rohre 3, 4 um die gemeinsame Rohrachse 5, einen zur Befestigung des Laserbearbeitungskopfes 2 dienenden rohrförmigen Anschlussstutzen **8,** der in einem abgewinkelten unteren Rohrende **4a** des äußeren Rohrs 4 um die B-Achse drehbar gelagert ist, sowie ein zwischen dem inneren Rohr 3 und dem Anschlussstutzen 8 vorgesehenes Winkelgetriebe **9** In Form eines Kegelradgetriebes.

Die beiden Drehantriebe 6, 7 sind durch einen Doppel-Torque-Motor **10** mit zwei in einem gemeinsamen äußeren Statorgehäuse **11** drehbar gelagerten, axial beabstandeten Rotoren (Läufern) **12a, 12b** und mit zwei im Statorgehäuse 11 angeordneten, axial beabstandeten inneren Magnetspulen **13a, 13b** gebildet, die jeweils unabhängig voneinander Magnetfelder zum Drehen der beiden Rotoren 12a, 12b anregen können. Dabei können die beiden Rotoren 12a, 12b, anders als in Fig. 1 gezeigt, auch verschiedene Durchmesser aufweisen. Bei dem Torque-Motor 10 handelt es sich also um einen so genannten Innenläufer, bei dem der Rotor innen und der Stator außen angeordnet sind. Der obere Rotor 12a ist drehfest am oberen Rohrende des inneren Rohrs 3 befestigt und über ein oberes Radiallager **14a** im Statorgehäuse 11 bzw. im Gesamtgehäuse **15** drehbar gelagert. Der untere Rotor 12b ist drehfest am oberen Rohrende des äußeren Rohrs 4 befestigt und über ein unteres Radiallager **14b** im Statorgehäuse 11 bzw. im Gesamtgehäuse 15 drehbar gelagert. An ihren unteren Rohrenden sind die beiden Rohre 3, 4 über ein Radiallager **16** gegeneinander um die Rohrachse 5 drehbar gelagert, während der rohrförmigen Anschlussstutzen 8 im abgewinkelten Rohrende 4a des äußeren Rohrs 4 über ein Radiallager **17** um die B-Achse drehbar gelagert ist. Die Versorgungskabel **18a, 18b** der beiden Magnetspulen 13a, 13b sind auf der oberen axialen Stirnseite des Torque-Motors 10 herausgeführt, wobei die Kabel 18b der unteren Magnetspule 13b im Statorgehäuse 11 seitlich an der oberen Magnetspule 13a vorbeigeführt sind.

Zum Bestimmen der jeweiligen Drehposition der Rotoren 12a, 12b ist für jeden Rotor 12a, 12b ein eigenes Messsystem **19a, 19b** mit Drehwinkelgeber vorgesehen, das jeweils am Gehäuse 15 der Drehvorrichtung 1 befestigt ist. Das Messsystem 19a für den Rotor 12a des inneren Rohrs 3 ist oberhalb des Torque-Motors 10 und das Messsystem 19b für den Rotor 12b des äußeren Rohrs 4 unterhalb des Torque-Motors 10 angeordnet. Das Gehäuse 15 der Drehvorrichtung 1 ist in einer Pinole (nicht gezeigt) angeordnet und in drei Linearachsen bewegbar. Dem Laserbearbeitungskopf 2 wird ein Laserstrahl **20** über das innere Rohr 3, einen im äußeren Rohr 4 angeordneten Spiegel **21** und den rohrförmigen Anschlussstutzen 8 zugeführt.

Durch Drehen eines oder beider Rohre 3, 4 kann der Laserkopf 2 um die Bund/oder die C-Achse gedreht werden. Die im Vergleich zu zwei herkömmlichen Antriebsmotoren geringere Masse des Torque-Motors 10 verbessert das Dynamikverhalten, die benötigte Antriebsleistung der Linearachsen und damit die Bearbeitungsgeschwindigkeit der Laserbearbeitungsmaschine.

## Patentansprüche

1. Vorrichtung (1) zum Drehen mindestens eines Laserbearbeitungskopfes (2) um mindestens eine Achse,
mit mindestens einem Laserbearbeitungskopf (2),
mit zwei koaxial ineinanderliegenden Rohren (3, 4), die um eine gemeinsame, die C-Achse bildende Rohrachse (5) drehbar gelagert sind, und
mit zwei Drehantrieben (6, 7) zum Drehen der beiden Rohre (3, 4) um die gemeinsame Rohrachse (5),
wobei dem Laserbearbeitungskopf (2) ein Laserstrahl (20) über das innere Rohr (3) zugeführt ist,
**dadurch gekennzeichnet,**
**dass** die beiden Drehantriebe (6, 7) durch einen Doppel-Torque-Motor (10) mit zwei in einem gemeinsamen Statorgehäuse (11) drehbar gelagerten, axial beabstandeten Rotoren (12a, 12b) und mit zwei im Statorgehäuse (11) angeordneten, axial beabstandeten Magnetspulen (13a, 13b) gebildet sind.

2. Vorrichtung nach Anspruch 1, **dadurch gekennzeichnet, dass** zum Drehen des mindestens einen Laserbearbeitungskopfes (2) um zwei rechtwinklige Bund C-Achsen ein zur Befestigung des Laserbearbeitungskopfes (2) dienender Anschlussstutzen (8) in dem äußeren Rohr (4) um die B-Achse drehbar gelagert ist, und dass zwischen dem inneren Rohr (3) und dem Anschlussstutzen (8) ein Winkelgetriebe (9) vorgesehen ist.

3. Vorrichtung nach Anspruch 1 oder 2, **dadurch gekennzeichnet, dass** die beiden Rotoren (12a, 12b) als innere Rotoren und das Statorgehäuse (11) als äußeres Statorgehäuse ausgebildet sind.

4. Vorrichtung nach einem der vorhergehenden Ansprüche, **dadurch gekennzeichnet, dass** die Kabel (18a, 18b) der beiden Magnetspulen (13a, 13b) auf der gleichen axialen Stirnseite des Torque-Motors (10) vorgesehen sind.

5. Vorrichtung nach einem der vorhergehenden Ansprüche, **dadurch gekennzeichnet, dass** für die beiden Rotoren (12a, 12b) jeweils ein Messsystem (19a, 19b) zum Bestimmen der jeweiligen Drehposition der Rotoren (12a, 12b) vorgesehen ist.

6. Vorrichtung nach Anspruch 5, **dadurch gekennzeichnet, dass** das Messsystem (19a) für den Rotor (12a) des inneren Rohrs (3) und das Messsystem (19b) für den Rotor (12b) des äußeren Rohrs (4) auf unterschiedlichen Stirnseiten des Torque-Motors (10) angeordnet sind.

7. Vorrichtung nach einem der vorhergehenden Ansprüche, **dadurch gekennzeichnet, dass** der Laserstrahl (20) dem Laserbearbeitungskopf (2) über das innere Rohr (3), einen im äußeren Rohr (4) angeordneten Spiegel (21) und den rohrförmig ausgeführten Anschlussstutzen (8) zugeführt ist.

8. Vorrichtung nach einem der vorhergehenden Ansprüche, **dadurch gekennzeichnet, dass** die Drehvorrichtung (1) in einer Pinole angeordnet ist.

## Claims

1. Device (1) for rotating at least one laser processing head (2) about at least one axis, comprising:
at least one laser processing head (2),
two tubes (3, 4) which are coaxially arranged inside each other and are mounted such that they can be rotated about a common tube axis (5) which forms the C-axis, and
two rotary drives (6, 7) for rotating the two tubes (3, 4) about the common tube axis (5),
wherein a laser beam (20) is guided to the laser processing head (2) via the inner tube (3),
**characterized in that**
the two rotary drives (6, 7) are formed by a double torque motor (10) with two rotors (12a, 12b) which are axially spaced apart from one another and are mounted in a rotatable manner in a common stator housing (11), and with two magnet coils (13a, 13b) which are arranged in the stator housing (11) and are axially spaced apart from one another.

2. Device according to claim 1, **characterized in that** for rotating the at least one laser processing head (2) about two perpendicular B- and C-axes, a connecting piece (8), which is used to mount the laser processing head (2), is mounted in the outer tube (4) in a manner rotatable about the B-axis, and that an angular gear (9) is provided between the inner tube (3) and the connecting piece (8).

3. Device according to claim 1 or 2, **characterized in that** the two rotors (12a, 12b) are designed as inner rotors and the stator housing (11) is designed as outer stator housing.

4. Device according to any one of the preceding claims, **characterized in that** the cables (18a, 18) of the two magnet coils (13a, 13b) are provided on the same axial front side of the torque motor (10).

5. Device according to any one of the preceding claims, **characterized in that** a measuring system (19a, 19b) is provided for each of the two rotors (12a, 12b) for determining the respective rotary position of the rotors (12a, 12b).

6. Device according to claim 5, **characterized in that** the measuring system (19a) for the rotor (12a) of the inner tube (3) and the measuring system (19b) for the rotor (12b) of the outer tube (4) are arranged on different front sides of the torque motor (10).

7. Device according to any one of the preceding claims, **characterized in that** the laser beam (20) is guided to the laser processing head (2) via the inner tube (3), a mirror (21) arranged in the outer tube (4), and the tubular connecting piece (8).

8. Device according to any one of the preceding claims, **characterized in that** the rotary device (1) is arranged in a spindle sleeve.

## Revendications

1. Dispositif (1) pour faire tourner au moins une tête (2) d'usinage au laser autour d'au moins un axe,
avec au moins une tête (2) d'usinage au laser,
avec deux tubes (3, 4) disposés coaxialement l'un à l'intérieur de l'autre, qui sont montés à rotation autour d'un axe de tube commun (5) formant l'axe C,
et avec deux entraînements en rotation (6, 7) pour faire tourner les deux tubes (3, 4) autour de l'axe de tube commun (5),
sachant qu'un rayon laser (20) est apporté à la tête (2) d'usinage au laser par l'intermédiaire du tube intérieur (3),
**caractérisé en ce que** les deux entraînements en rotation (6, 7) sont formés par un moteur couple double (10) avec deux rotors (12a, 12b) axialement espacés, montés à rotation dans une carcasse de stator commune (11), et avec deux bobines magnétiques (13a, 13b) axialement espacées, disposées dans la carcasse de stator (11).

2. Dispositif selon la revendication 1, **caractérisé en ce que**, afin de faire tourner la tête (2) d'usinage au laser au moins unique autour de deux axes perpendiculaires B et C, un embout de raccordement (8) servant à fixer la tête (2) d'usinage au laser est monté à rotation autour de l'axe B dans le tube extérieur (4), et **en ce qu'**un renvoi d'angle (9) est prévu entre le tube intérieur (3) et l'embout de raccordement (8).

3. Dispositif selon la revendication 1 ou 2, **caractérisé en ce que** les deux rotors (12a, 12b) sont réalisés sous la forme de rotors intérieurs et la carcasse de stator (11) sous la forme de carcasse de stator extérieure.

4. Dispositif selon l'une des revendications précédentes, **caractérisé en ce que** les câbles (18a, 18b) des deux bobines magnétiques (13a, 13b) sont prévus sur le même côté frontal axial du moteur couple (10).

5. Dispositif selon l'une des revendications précédentes, **caractérisé en ce qu'**un système de mesure respectif (19a, 19b) est prévu pour chacun des deux rotors (12a, 12b) afin de déterminer la position de rotation respective des rotors (12a, 12b).

6. Dispositif selon la revendication 5, **caractérisé en ce que** le système de mesure (19a) pour le rotor (12a) du tube intérieur (3) et le système de mesure (19b) pour le rotor (12b) du tube extérieur (4) sont disposés sur des côtés frontaux différents du moteur couple (10).

7. Dispositif selon l'une des revendications précédentes, **caractérisé en ce que** le rayon laser (20) est apporté à la tête (2) d'usinage au laser par l'intermédiaire du tube intérieur (3), d'un miroir (21) disposé dans le tube extérieur (4) et de l'embout de raccordement (8) réalisé tubulaire.

8. Dispositif selon l'une des revendications précédentes, **caractérisé en ce que** le dispositif de rotation (1) est disposé dans un fourreau.
